# DEMANDE DE BREVET EUROPEEN

(11) **EP 0 593 328 A1**
(43) Date de publication de la demande: **20.04.1994**
(21) Numéro de dépôt: 93402400.1
(22) Date de dépôt: 01.10.1993
(51) Int. Cl.: B62D 25/20

(54) **Benne basculante pour véhicule**

(30) Priorité: 12.10.1992 FR 9212151
(71) Demandeur: MARREL, F-42160 Andrézieux-Bouthéon (FR)
(72) Inventeur: Fayolle, Joseph, F-42000 Saint Etienne (FR)
(74) Mandataire: Rinuy, Santarelli

(57) **Abrégé**

Une benne basculante pour véhicule qui comporte un maître-longeron (16) disposé centralement et des renforts (18), avec fixée sous le maître-longeron une patte d'articulation (20) pour un moyen de commande du basculement de la benne, et fixées sous un renfort (18), des pattes (19) d'articulation de la benne par rapport au véhicule.

## Description

L'invention a trait à la construction des bennes basculantes pour véhicules.

On sait que les bennes basculantes et plus précisément le fond de celles-ci (leur partie horizontale inférieure) est traditionnellement fabriqué en préparant d'une part une ossature formée par des traverses soudées au-dessus de deux longerons, dont l'écartement correspond à celui des longerons du véhicule sur lequel doit être montee la benne, des pattes d'articulation étant prévues sous les longerons de la benne pour coopérer avec des pattes d'articulation correspondantes prévues sur les longerons du véhicule afin de permettre le basculement de la benne ; et en préparant d'autre part la caisse proprement dite, l'ossature et la caisse étant ensuite soudées l'une à l'autre.

A l'heure actuelle, les bennes ne sont généralement plus fabriquées avec une ossature indépendante, mais avec un fond de caisse dit intégré où les poutres sont assemblées en même temps à la fois entre elles et à la tôle de la caisse, qui participe également à la rigidification de la benne, les traverses n'étant plus en une seule pièce et disposées au-dessus des longerons, mais séparées en segments disposés entre les longerons et de part et d'autre de ceux-ci, avec le dessus des traverses et des longerons situés à peu près au même niveau.

L'invention vise à optimiser encore la fabrication des bennes basculantes.

Elle propose à cet effet, une benne basculante pour véhicule, comportant un fond intégré, caractérisé en ce que ledit fond comporte :
- une tôle de fond horizontale ;
- à chaque extrémité longitudinale de la tôle de fond, une bordure comportant une paroi verticale sous la tôle de fond ;
- à chaque extrémité transversale, une traverse soudée à la tôle de fond et auxdites bordures ;
- un maître-longeron disposé centralement sous la tôle de fond à laquelle il est soudé ;
- des renforts soudés sous la tôle de fond ;
- une patte d'articulation pour un moyen de basculement de la benne, fixée sous le maître-longeron ; et
- des pattes d'articulation de la benne par rapport au véhicule, fixées sous au moins un renfort porteur faisant partie desdits renforts.

Contrairement à toutes les bennes fabriquées jusqu'ici, la benne basculante selon l'invention ne comporte plus les deux longerons dont l'écartement correspond à celui des longerons du véhicule et qui portait les pattes d'articulation, mais un maître-longeron central (disposé suivant le plan de symétrie longitudinal de la benne) qui forme une sorte d'épine dorsale, les pattes d'articulation par rapport au véhicule étant disposées sur des poutres de renfort.

Avec une telle structure, la fabrication de la benne est facilitée et peut nécessiter moins de matière première qu'avec les bennes antérieures.

En outre, la benne selon l'invention peut être fabriquée à un moment où l'on ne sait pas encore sur quel véhicule elle va être montée puisqu'il n'est pas nécessaire de connaître l'écartement des longerons du véhicule au moment de la fabrication de la benne proprement dite, les pattes d'articulation pouvant être positionnées de façon adéquate à un stade ultérieur, lorsque l'on sait sur quel véhicule la benne va être montée.

Selon des caractéristiques préférées, chaque dit renfort porteur est une traverse.

En prévoyant que ce soit par une traverse que soient portées les pattes d'articulation dont l'écart varie d'un véhicule à l'autre, on évite que la plage de la variation de l'écart ne soit réduite, comme cela se produirait par exemple si les renforts porteurs étaient des longerons.

Dans des modes de réalisation préférés, convenant particulièrement bien pour une benne qui bascule uniquement en arrière :
- ledit maître-longeron s'étend de l'une des traverses d'extrémité à l'autre, et lesdits renforts sont réalisés par plusieurs traverses formées chacune par deux demi-traverses opposées s'étendant chacune dudit maître-longeron à une dite bordure, la traverse de renfort arrière portant sur chacune de ses demi-traverses une patte d'articulation arrière de la benne ;
- ledit maître-longeron s'étend de l'une des traverses d'extrémité à l'autre, et lesdits renforts sont réalisés par plusieurs longerons s'étendant chacun de l'une des traverses d'extrémité à l'autre avec au moins deux longerons de renfort équidistants dudit maître-longeron et portant chacun une patte d'articulation arrière de la benne ;
- ledit maître-longeron s'étend de l'une des traverses d'extrémité à l'autre, et lesdits renforts sont réalisés de chaque côté du maître-longeron par deux poutres disposées en X s'étendant d'une traverse d'extrémité à l'autre, et par une traverse s'étendant entre les deux poutres et portant une patte d'articulation arrière de la benne.

Selon d'autres caractéristiques préférées de réalisation, qui conviennent particulièrement bien pour des bennes capables de basculer en arrière ainsi que d'un côté ou de l'autre :
- ledit maître-longeron s'étend entre deux traverses de renfort porteuses dont chacune s'étend d'une bordure à l'autre et comporte deux pattes d'articulation de la benne ;
- lesdits renforts comportent en outre plusieurs traverses formées chacune par deux demi-traverses opposées s'étendant chacune dudit maître-longeron à une dite bordure ;
- lesdits renforts comportent en outre plusieurs longerons s'étendant chacun de l'une des traverses de renfort porteuses à l'autre dont au moins deux longerons de renfort équidistants dudit maître-longeron ;
- lesdits renforts comportent en outre de chaque côté du maître-longeron, deux poutres disposées en X et s'étendant d'une traverse de renfort porteuse à l'autre ;
- lesdits renforts comportent en outre un longeron disposé centralement entre chaque traverse de renfort porteuse et la traverse d'extrémité correspondante.

Selon d'autres caractéristiques préférées comme étant simples, commodes et économiques :
- ladite bordure est réalisée par pliage en U d'un élément de tôle dont fait partie ladite tôle de fond ;
- ladite bordure est réalisée par un profilé en S soudé à la tôle de fond ;
- ledit maître-longeron est réalisé par un profilé en omega ;
- au moins une plaque de raidissement est soudée sous ledit maître-longeron ;
- la tôle de fond comporte une partie droite et une partie gauche se raccordant centralement par une soudure effectuée sur une paroi supérieure horizontale du maître-longeron.

L'exposé de l'invention sera maintenant poursuivi par la description d'exemples de réalisation, donnée ci-après à titre illustratif et non limitatif en référence aux dessins annexés sur lesquels :
- la figure 1 est une vue en élévation de côté d'un camion muni d'une benne basculant en arrière ;
- la figure 2 est une vue en plan de dessous d'une benne conforme à l'invention prévue pour basculer uniquement en arrière ;
- la figure 3 est la vue en coupe repérée III-III sur la figure 2 ;
- les figures 4, 5 et 6, 7 montrent de la même façon respectivement deux autres exemples de réalisation d'une telle benne ;
- la figure 8 montre une benne capable de pivoter en arrière, ainsi que d'un côté ou de l'autre du véhicule sur lequel elle est montée ;
- la figure 9 est une vue en plan de dessous d'une benne conforme à l'invention, prévue pour pivoter comme la benne de la figure 8 ;
- la figure 10 est la vue en coupe repérée X-X sur la figure 9 ; et
- les figures 11, 12 et 13, 14 montrent de la même façon respectivement deux autres exemples de réalisation d'une telle benne.

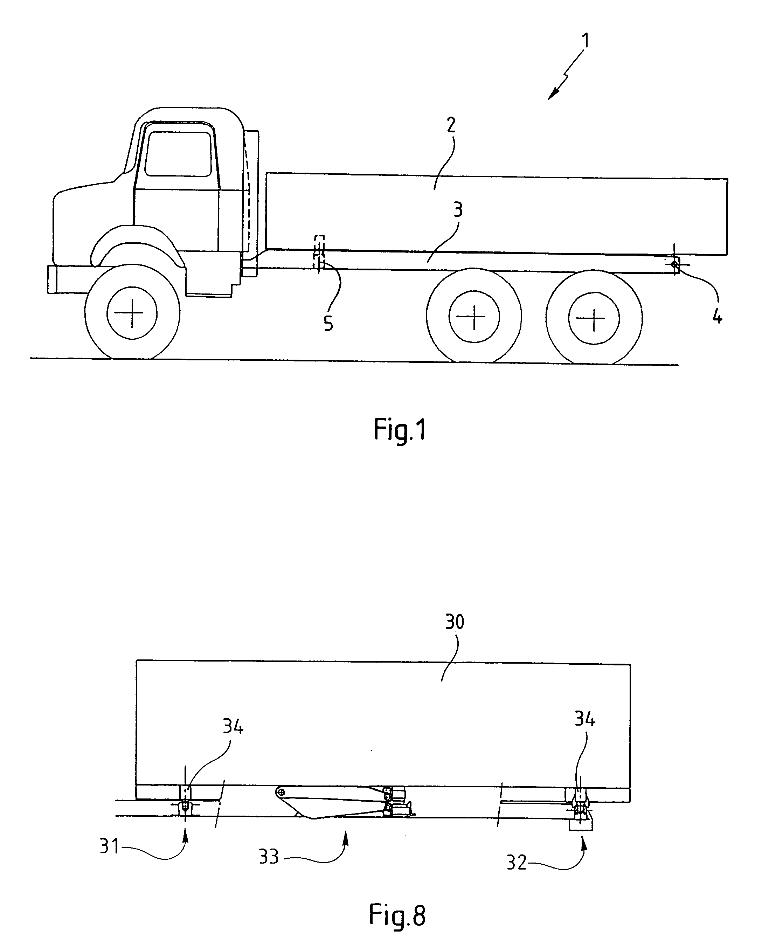

Le camion 1 montré sur la figure 1 comporte une benne 2 conforme à l'invention disposée au-dessus des longerons 3 du châssis du camion, et elle prévue pour basculer uniquement en arrière, en pivotant autour de l'axe 4 grâce au vérin à télescopage multiple 5.

On notera que par souci de simplification, on appelle ici longerons du véhicule les longerons fixes sur lesquels s'articule la benne, que ces longerons fassent partie du châssis proprement dit du véhicule ou qu'ils fassent partie d'un faux-châssis fixé sur le châssis proprement dit.

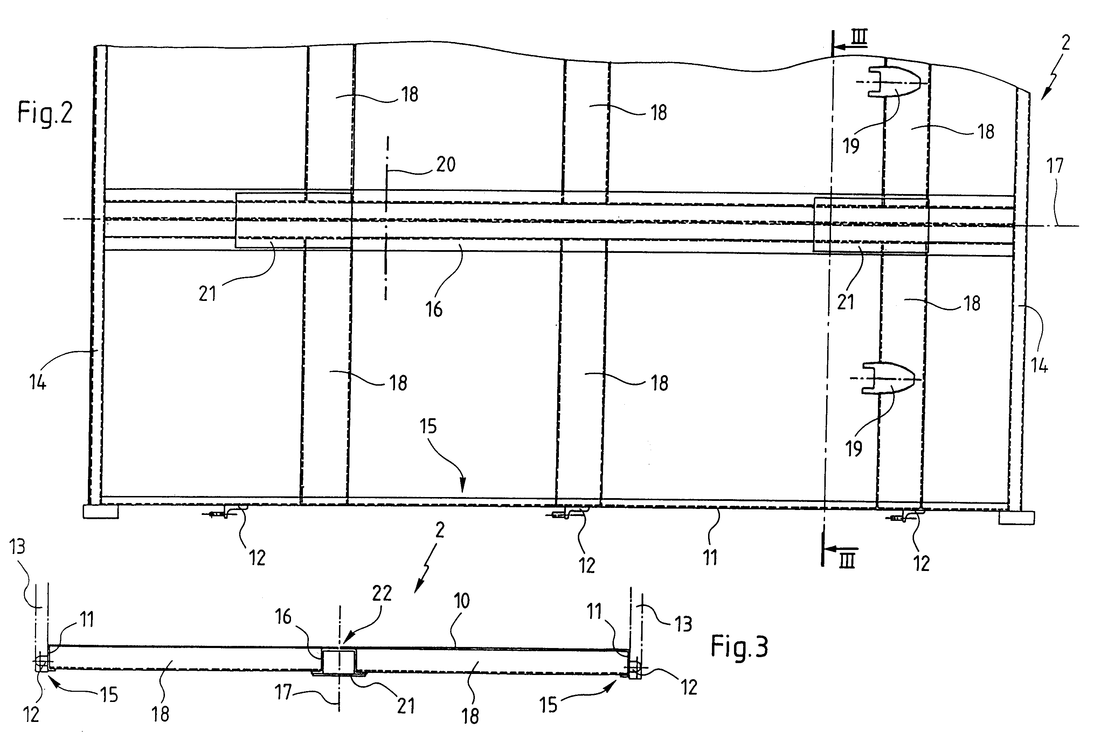

Comme on le voit sur les figures 2 et 3, la benne 2 comporte un fond de caisse intégré formé par une tôle de fond horizontale 10 munie à chaque extrémité longitudinale d'une bordure 15 comportant sous la tôle 10 une paroi verticale 11 du côté extérieur de laquelle sont fixées des charnières 12 pour une ridelle 13. A chaque extrémité transversale de la tôle 10, est prévue une traverse 14 soudée à cette dernière et aux bordures 15. Un maître-longeron 16 est disposé sous la tôle 10 à laquelle il est soudé, en position centrale, c'est-à-dire suivant le plan de symétrie longidutinal 17 de la benne 2, le maître-longeron 16 s'étendant de l'une des traverses d'extrémité 14 à l'autre, auxquelles il est soudé. Il est en outre prévu des renforts qui sont ici réalisés par trois traverses formées chacune par deux demi-traverses opposées 18, s'étendant chacune entre le maître-longeron 16 et l'une des bordures 15 en étant soudées à la tôle 10, au maître-longeron 16 et à la bordure 15. La traverse de renfort arrière comporte sur chacune de ses demi-traverses 18, une patte 19 d'articulation arrière de la benne, qui sert à former l'axe d'articulation 4 en coopérant avec une patte correspondant prévue sur chaque longeron 3 du camion 1. Le maître-longeron 16 porte également une patte d'articulation 20 (représentée simplement par son axe d'articulation) pour le vérin de basculement 5.

Lorsqu'on fait sortir la tige à multiple télescopage de celui-ci, la benne 2 bascule de façon bien connue en arrière autour de l'axe 4, la poussée du vérin 5 étant reçue par le maître-longeron 16 qui la transmet au reste de la benne.

Le maître-longeron 16 est réalisé par un profilé à section en omega, sous lequel sont soudées des plaques de raidissement 21, ici au nombre de deux.

La tôle 10 comporte une partie droite et une partie gauche qui se raccordent centralement par une soudure 22 (voir figure 3) effectuée sur la paroi supérieure horizontale du maître-longeron 16.

Les bordures 15 sont ici réalisées par pliage en U de l'une des extrémités de chacun des éléments de tôle droit et gauche dont la partie horizontale forme la tôle de fond 10.

Les demi-traverses 18 sont chacune formée par un profilé en forme de U ouvert vers le haut.

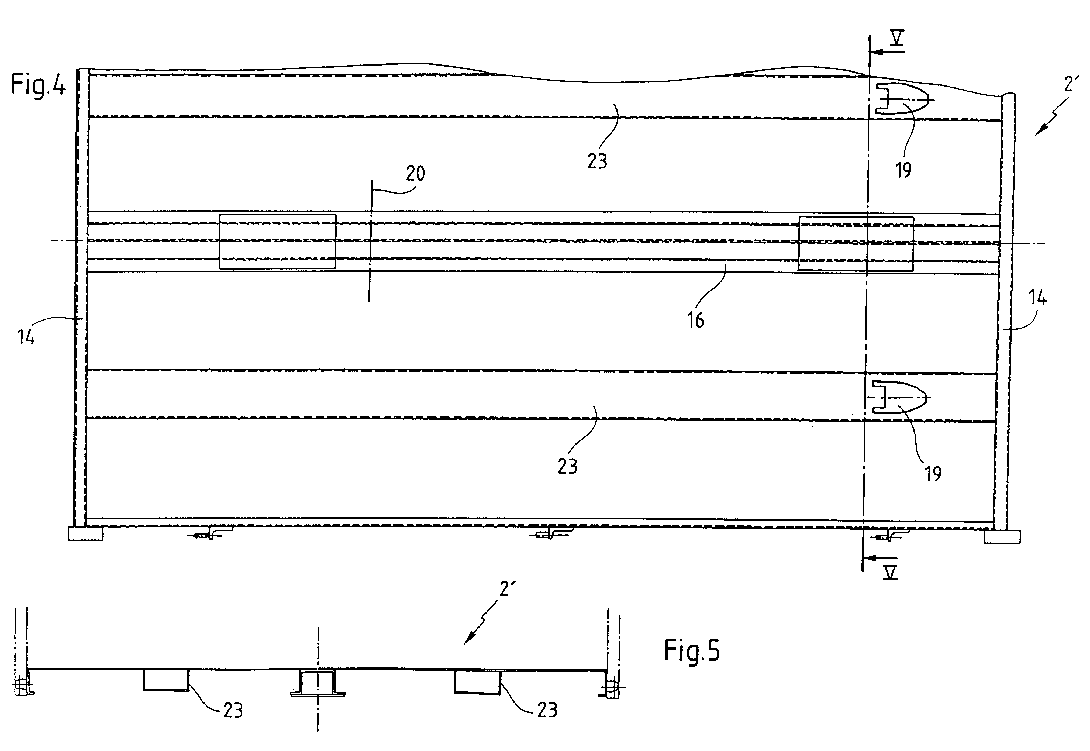

Dans la variante 2' montrée sur les figures 4 et 5, le fond de benne est similaire mais les demi-traverses 18 ont été remplacées par deux longerons 23 équidistants du maître-longeron 16, s'étendant chacune de l'une des traverses d'extrémité 14 à l'autre en étant soudé à ces traverses et à la tôle 10, chaque longeron 23 portant l'une des pattes d'articulation 19. Tout comme les demi-traverses 18, les longerons 23 sont formés dans un profilé en forme de U ouvert vers le haut.

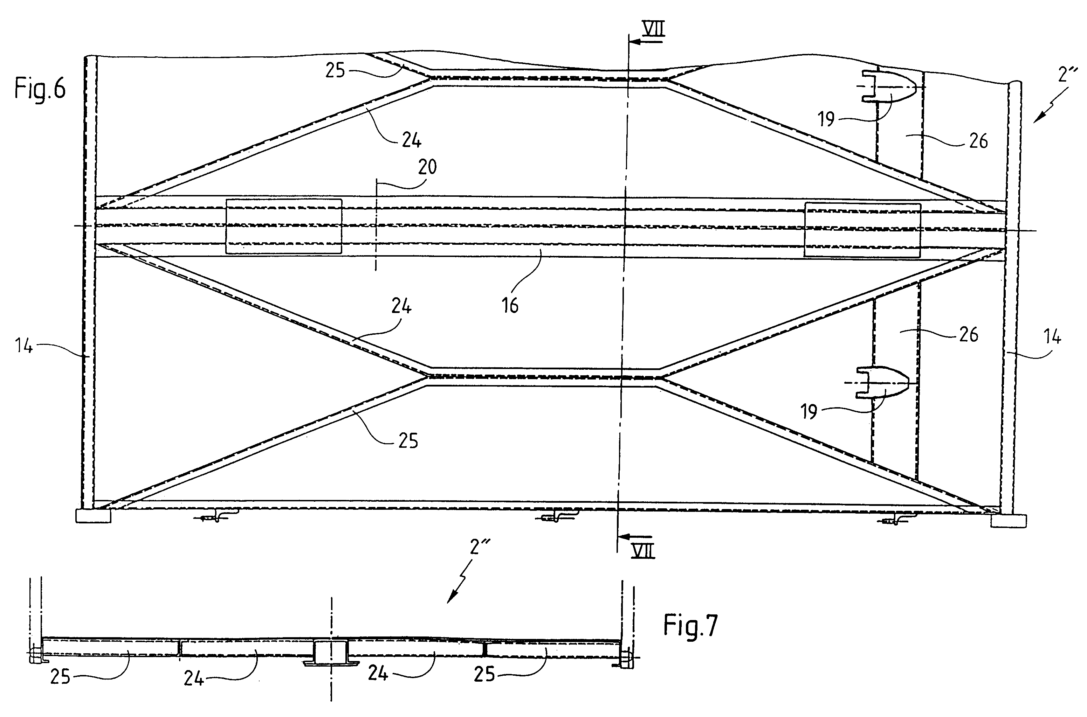

Dans la variante 2'' montrée sur les figures 6 et 7, les demi-traverses 18 sont remplacées de chaque côté du maître-longeron 16 par deux poutres 24 et 25 disposées en X qui s'étendent d'une traverse d'extrémité 14 à l'autre en étant soudées à la tôle 10, au maître-longeron 16 pour la poutre 24 et à la bordure 15 pour la poutre 25, et par une traverse 26 s'étendant entre les poutres 24 et 25 et portant la patte d'articulation 19. Les poutres 24 et 25 sont faites dans un profilé en forme de C, ouvert vers l'intérieur pour la poutre 24 et vers l'extérieur pour la poutre 25, et les traverses 26 sont formées par un profilé en forme de U ouvert en haut.

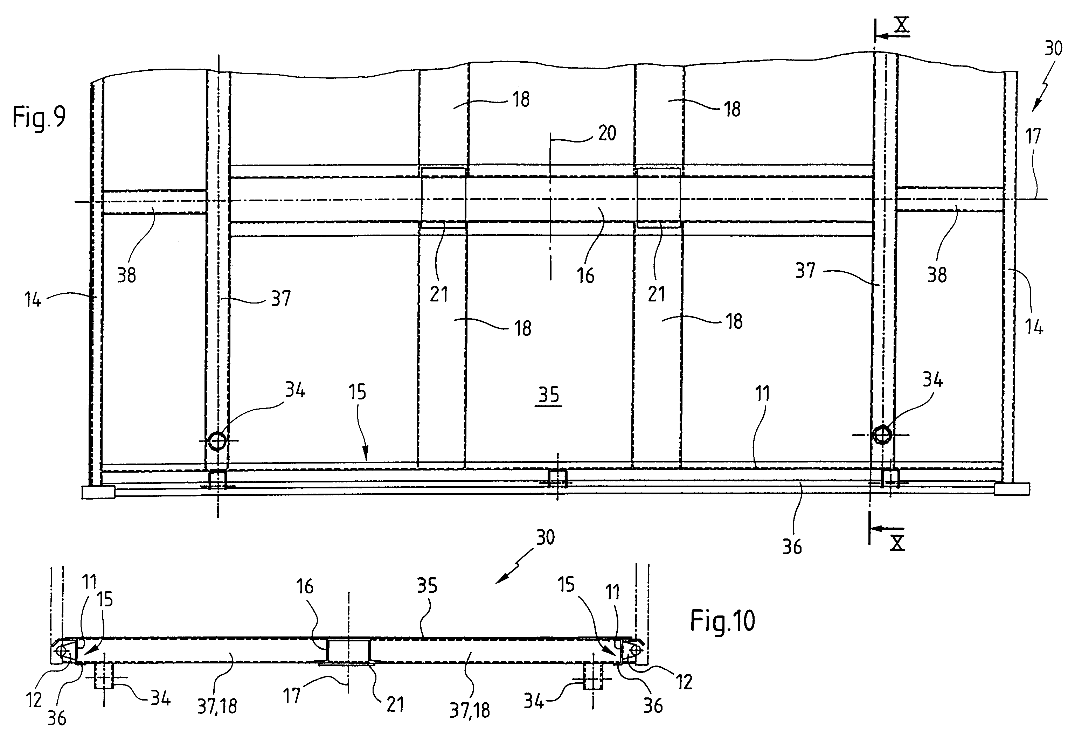

La benne 30 montrée sur la figure 8 est du type dit multi-basculant pour lequel est prévu, de chaque côté droit et gauche, un dispositif d'articulation avant 31 et un dispositif d'articulation arrière 32 ; ainsi qu'un compas 33 de commande du basculement de la benne. Comme cela est bien connu, il faut libérer les deux dispositifs d'articulation avant 31 pour que la benne bascule en arrière autour des dispositifs 32 lorsqu'on commande l'ouverture du compas 33 dont les branches s'écartent grâce à un vérin dont chaque extrémité est articulée à l'une des branches, tandis que pour faire basculer la benne du côté droit, il faut déverrouiller les dispositifs 31 et 32 situés du côté gauche, et vice-versa.

Les dispositifs d'articulation 31 et 32 se fixent chacun à la benne 30 grâce à une patte d'articulation 34.

Ainsi qu'on le voit sur les figures 9 et 10, la benne 30 est similaire à la benne 2, mais la tôle de fond 10 en deux parties droite et gauche pliées en U aux extrémités externes, est remplacée par une tôle de fond unique 35 avec les bordures 15 qui sont réalisées par un profilé en S 36 soudé à la tôle 15 ; au lieu de s'étendre de l'une des traverses d'extrémité 14 à l'autre, le maître-longeron 16 s'étend entre deux traverses de renfort 37 portant respectivement les deux pattes 34 des dispositifs d'articulation avant 31 et les deux pattes 34 des dispositifs d'articulation arrière 32, le longeron 16 étant soudé à la tôle de fond 35 et aux traverses de renfort porteuses 37 qui sont elles-mêmes soudées à la tôle 35 et aux profilés 36, les traverses 37 étant à section rectangle ; il est prévu à chaque extrémité de la benne 30 entre les traverses 37 et 14 un longeron 38 disposé centralement (suivant le plan de symétrie longitudinal 17) chaque longeron 38 étant soudé aux traverses 14 et 37 entre lesquelles il est disposé et à la tôle de fond 35, les longerons 38 étant comme les traverses 37 à section rectangulaire ; il y a seulement deux traverses formées par les demi-traverses 18 ; et la patte d'articulation 20 est prévue pour le compas 33.

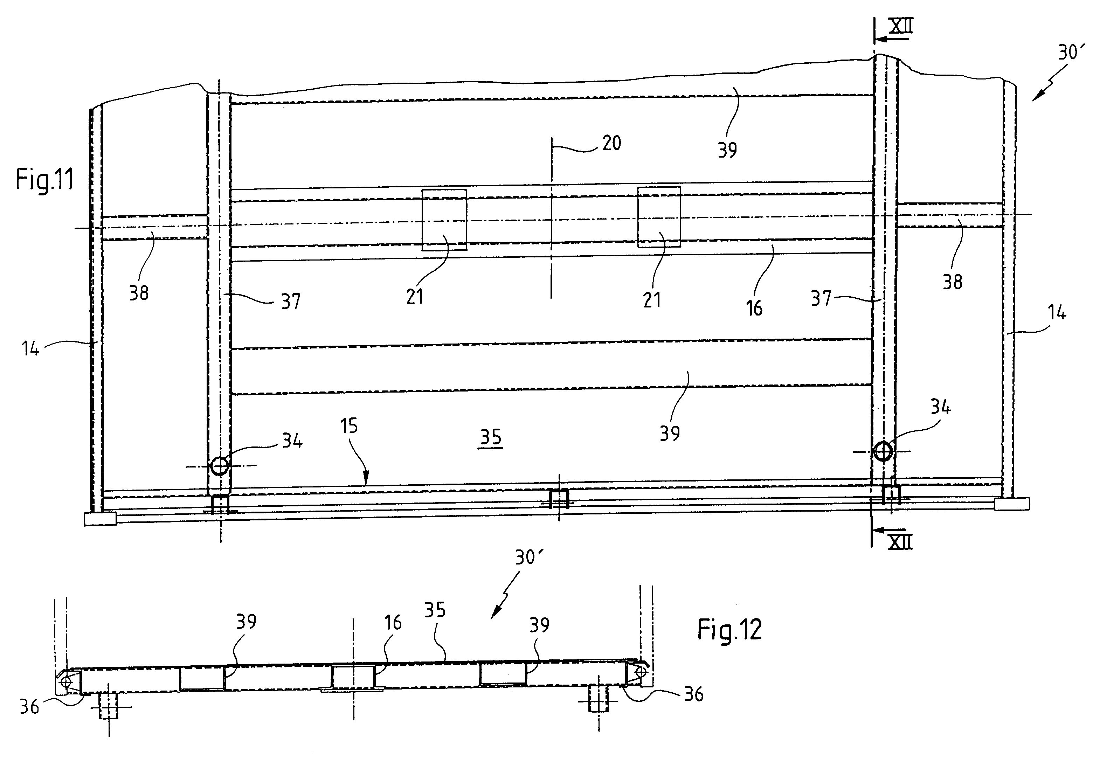

La variante 30' montrée sur les figures 11 et 12 est similaire à la benne 30, mais les demi-traverses 18 sont remplacées par des longerons 39 équidistants du maître-longeron 16, s'étendant chacun de l'une des traverses 37 à l'autre en étant soudés à la tôle de fond 35 et aux traverses 37, les longerons 39 ayant une section en U ouvert en haut.

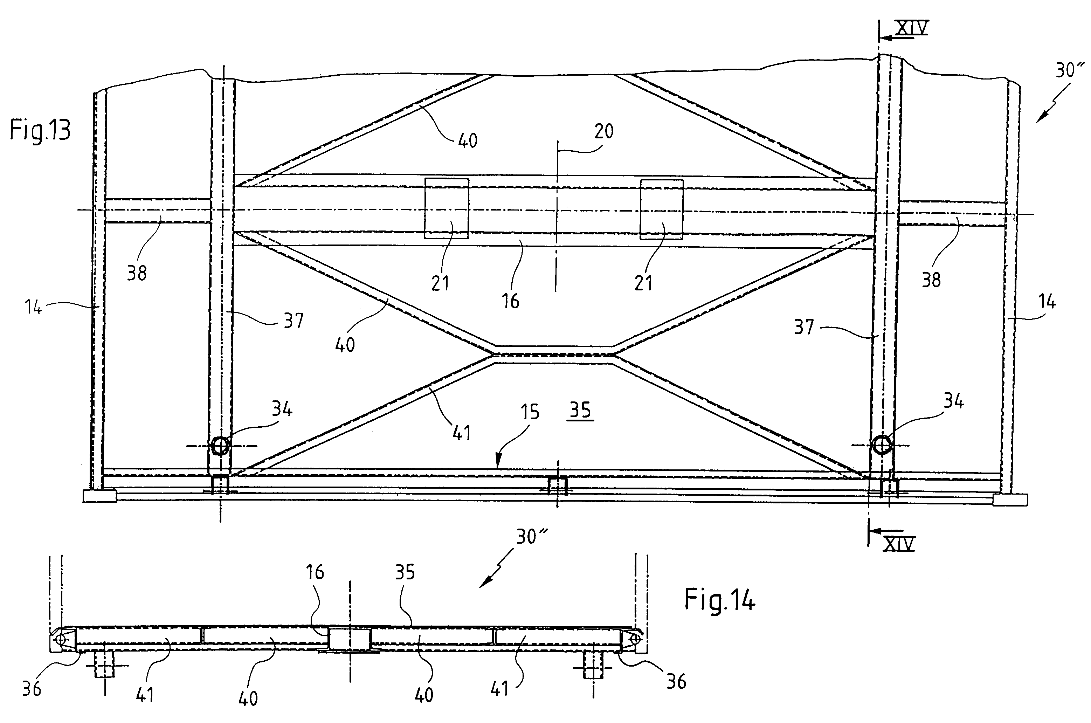

Dans la variante 30'' montrée sur les figures 13 et 14, les demi-traverses 18 sont remplacées de chaque côté du maître-longeron 16 par deux poutres 40 et 41 disposées en X qui s'étendent d'une traverse 37 à l'autre en étant soudées sur la tôle de fond 35, la poutre 40 ayant ses extrémités soudées sur le maître-longeron 16 et la poutre 41 sur le profilé 36, les poutres 40 et 41 ayant une section en C ouvert vers l'intérieur pour la poutre 40 et vers l'extérieur pour la poutre 41.

Bien entendu, la benne selon l'invention convient pour tout type de moyen de basculement, les bennes 2, 2' et 2'' peuvent par exemple être utilisées avec un compas, et les bennes 30, 30' et 30'' avec un vérin à multiple télescopage.

On rappelle que l'invention n'est pas limitée aux exemples décrits et représentés.

## Revendications

1. Benne basculante pour véhicule, comportant un fond intégré, caractérisé en ce que ledit fond comporte :
- une tôle de fond (10, 35) horizontale ;
- à chaque extrémité longitudinale de la tôle de fond, une bordure (15) comportant une paroi verticale (11) sous la tôle de fond ;
- à chaque extrémité transversale, une traverse (14) soudée à la tôle de fond (10, 35) et auxdites bordures (15) ;
- un maître-longeron (16) disposé suivant le plan de symétrie longitudinal de la benne, sous la tôle de fond, à laquelle il est soudé ;
- des renforts (18 ; 23 ; 24, 25, 26 ; 18, 37 , 38 ; 37, 38, 39 ; 37, 38, 40, 41) soudés sous la tôle de fond ;
- une patte d'articulation (20) pour un moyen (5, 33) de basculement de la benne, fixée sous le maître-longeron (16) ; et
- des pattes (19, 34) d'articulation de la benne par rapport au véhicule, fixées sous au moins un renfort porteur (18, 23, 26, 37) faisant partie desdits renforts.

2. Benne selon la revendication 1, caractérisée en ce que chaque dit renfort porteur (18, 26, 37) est une traverse.

3. Benne selon l'une quelconque des revendications 1 ou 2, caractérisée en ce que ledit maître-longeron (16) s'étend de l'une des traverses d'extrémité (14) à l'autre, et en ce que lesdits renforts sont réalisés par plusieurs traverses formées chacune par deux demi-traverses (18) opposées s'étendant chacune dudit maître-longeron (16) à une dite bordure (15), la traverse de renfort arrière portant sur chacune de ses demi-traverses une patte (19) d'articulation arrière de la benne.

4. Benne selon la revendication 1, caractérisée en ce que ledit maître-longeron (16) s'étend de l'une des traverses d'extrémité (14) à l'autre, et en ce que lesdits renforts sont réalisés par plusieurs longerons s'étendant chacun de l'une des traverses d'extrémité (14) à l'autre avec au moins deux longerons de renfort (23) équidistants dudit maître-longeron (16) et portant chacun une patte (19) d'articulation arrière de la benne.

5. Benne selon l'une quelconque des revendications 1 ou 2, caractérisée en ce que ledit maître-longeron (16) s'étend de l'une des traverses d'extrémité (14) à l'autre, et en ce que lesdits renforts sont réalisés de chaque côté du maître-longeron par deux poutres (24, 25) disposées en X s'étendant d'une traverse d'extrémité (14) à l'autre, et par une traverse (26) s'étendant entre les deux poutres (24, 25) et portant une patte (19) d'articulation arrière de la benne.

6. Benne selon l'une quelconque des revendications 1 ou 2, caractérisée en ce que ledit maître-longeron (16) s'étend entre deux traverses de renfort porteuses (37) dont chacune s'étend d'une bordure (15) à l'autre et comporte deux pattes (34) d'articulation de la benne.

7. Benne selon la revendication 6, caractérisée en ce que lesdits renforts comportent en outre plusieurs traverses formées chacune par deux demi-traverses opposées (18) s'étendant chacune dudit maître-longeron (16) à une dite bordure (15).

8. Benne selon la revendication 6, caractérisée en ce que lesdits renforts comportent en outre plusieurs longerons s'étendant chacun de l'une des traverses de renfort porteuses (37) à l'autre dont au moins deux longerons de renfort (39) équidistants dudit maître-longeron (16).

9. Benne selon la revendication 6, caractérisée en ce que lesdits renforts comportent en outre de chaque côté du maître-longeron (16), deux poutres (40, 41) disposées en X et s'étendant d'une traverse de renfort porteuse (37) à l'autre.

10. Benne selon l'une quelconque des revendications 6 à 9, caractérisée en ce que lesdits renforts comportent en outre un longeron (38) disposé centralement entre chaque traverse de renfort porteuse (37) et la traverse d'extrémité correspondante (14).

11. Benne selon l'une quelconque des revendications 1 à 10, caractérisée en ce que ladite bordure (15) est réalisée par pliage en U d'un élément de tôle dont fait partie ladite tôle de fond (10).

12. Benne selon l'une quelconque des revendications 1 à 10, caractérisée en ce que ladite bordure (15) est réalisée par un profilé en S (36) soudé à la tôle de fond (35).

13. Benne selon l'une quelconque des revendications 1 à 10, caractérisée en ce que ledit maître-longeron (16) est réalisé par un profilé en omega.

14. Benne selon l'une quelconque des revendications 1 à 13, caractérisée en ce qu'au moins une plaque de raidissement (21) est soudée sous ledit maître-longeron (16).

15. Benne selon l'une quelconque des revendications 1 à 14, caractérisée en ce que la tôle de fond (10) comporte une partie droite et une partie gauche se raccordant centralement par une soudure (22) effectuée sur une paroi supérieure horizontale du maître-longeron (16).
